# EUROPÄISCHE PATENTSCHRIFT

(11) **EP 0 898 804 B1**
(45) Veröffentlichungstag und Bekanntmachung des Hinweises auf die Patenterteilung: **27.10.1999**
(21) Anmeldenummer: 97923771.6
(22) Anmeldetag: 30.04.1997
(51) Int. Cl.: H02K 3/24, H02K 3/30, H02K 3/34, H01B 13/06, H01B 3/04

(54) **ELEKTRISCHER LEITER, ANORDNUNG ELEKTRISCHER LEITER SOWIE VERFAHREN ZUR ISOLATION EINES ELEKTRISCHEN LEITERS EINER ELEKTRISCHEN GROSSMASCHINE**
ELECTRIC CONDUCTOR, ARRANGEMENT OF ELECTRIC CONDUCTORS, AND METHOD OF INSULATING AN ELECTRIC CONDUCTOR OF A LARGE ELECTRIC MACHINE
CONDUCTEUR ELECTRIQUE, SYSTEME DE CONDUCTEURS ELECTRIQUES ET PROCEDE POUR ISOLER UN CONDUCTEUR ELECTRIQUE D'UNE MACHINE ELECTRIQUE DE GRANDES DIMENSIONS

(30) Priorität: 15.05.1996 DE 19619781
(43) Veröffentlichungstag der Anmeldung: 03.03.1999
(73) Patentinhaber: SIEMENS AKTIENGESELLSCHAFT, 80333 München (DE)
(72) Erfinder: WESTENDORF, Wilhelm, D-45473 Mülheim an der Ruhr (DE); MÜLLER, Rainer, D-40885 Ratingen (DE); SCHULTEN, Michael, D-44879 Bochum (DE)
(86) Internationale Anmeldenummer: DE9700886
(87) Internationale Veröffentlichungsnummer: WO9743816

(56) Entgegenhaltungen:
- EP-A- 0 356 929
- BE-A- 507 615
- DE-A- 2 720 270
- DE-A- 3 528 492
- DE-A- 3 600 065
- US-A- 4 241 101
- US-A- 5 143 950

## Beschreibung

Die Erfindung betrifft einen elektrischen Leiter für eine Wicklung einer elektrischen Großmaschine, insbesondere eines Turbogenerators, mit einer Längsrichtung und einer Stapelrichtung senkrecht zur Längsrichtung. Die Erfindung betrifft weiterhin eine Anordnung solcher aufeinander gestapelter elektrischer Leiter in einer elektrischen Großmaschine sowie ein Verfahren zur Herstellung einer Isolierung eines elektrischen Leiters.

In der WO 92/20140 A1 ist ein elektrischer Leiter mit einer Längsrichtung und einer Stapelrichtung senkrecht zur Längsrichtung beschrieben, der mit einer Mehrzahl gleichartiger Leiter in der Stapelrichtung stapelbar ist, wobei zwischen jeweils zwei Leitern zumindest eine Isolierschicht eingefügt ist. Dieser elektrische Leiter weist, in Längsrichtung gesehen, Schlitze auf, die mit entsprechenden Schlitzen benachbarter elektrischer Leiter und Schlitzen der Isolierschicht zumindest teilweise zur Überlappung gebracht sind. Durch die gestapelten elektrischen Leiter mit dazwischen angeordneten Isolierschichten sind in Stapelrichtung verlaufende Kühlkanäle für Kühlgas, insbesondere Luft oder Wasserstoff, gebildet. Bei der Herstellung der Schlitze in den elektrischen Leitern durch Stanzen oder Fräsen entstehen unter anderem scharfe Kanten, durch die eine unerwünschte elektrische Verbindung zwischen benachbarten elektrischen Leitern und somit Kurzschlüsse entstehen könnten. Diese unerwünschten elektrischen Verbindungen sind gemäß der WO 92/20140 A1 dadurch vermieden, daß die Schlitze in einer in Längsrichtung verlaufenden Nut des elektrischen Leiters eingebracht werden. Hierdurch ist bei einer Stapelung ein Zwischenraum zwischen der Mündung eines Schlitzes mit ggf. scharfer Kante und einer darüber gestapelten Isolierschicht und einem darauf anschließendem weiteren elektrischen Leiter hergestellt. Eine Nachbearbeitung der Schlitze, beispielsweise durch Entgraten, Abrunden oder Abschrägen, und dem damit verbundenen erhöhten Arbeitsaufwand wird somit vermieden. Aufgrund unterschiedlicher thermischer Ausdehnungskoeffizienten sowie möglicherweise vorhandener hygroskopischer Eigenschaften der Isolierschicht kann es zu einem zumindest teilweisen Verschluß der Schlitze durch die Isolierschicht kommen. Hierdurch wird einerseits der Strömungsquerschnitt der Schlitze sowie andererseits durch an Kanten auftretende Wirbel- und Ablöseerscheinungen der Strömungswiderstand in den Kühlkanälen vergrößert, so daß insgesamt eine geringere Kühlung erreichbar ist. Hierdurch wird die Kühlung einer elektrischen Großmaschine unerwünschterweise verringert, was im ungünstigsten Fall zu einer nicht ausreichenden Kühlung führt.

In der DE-AS 12 42 744 sind in nutenförmigen Einfräsungen eines Teilleiters einer Rotorwicklung einer elektrischen Maschine spezielle Paßstücke eingelegt, die eine äußerst verlustarme Radialströmung eines Kühlgases gewährleisten sollen. Zur Verbesserung der Isolation und Vermeidung von unerwünschten elektrischen Übergängen ist zwischen zwei aufeinandergestapelte Teilleiter jeweils eine Isolierschicht eingebracht, die über die Nut hinausragt und auf einem jeweiligen Paßstück aufliegt. Hierdurch ist zwar eine unerwünschte Reduzierung des Kühlgasstromes vermieden, was allerdings mit einem erhöhten Aufwand an Material und einem erhöhten Herstellungsaufwand verbunden ist.

In der DE 35 28 492 A1 ist ein Verfahren zum Schützen von solchen elektrischen Bauteilen angegeben, die Drahtwicklungen aufweisen, d.h. Bauteile kleinster elektrischer Leistung. Bei dem Verfahren wird eine duroplastische Harzschicht mit einem Beschichtungspulver auf Epoxydharzbasis aufgebracht, mit dem Ziel, die Drahtwicklungen zu einer mechanischen Einheit zu verbinden. Das Beschichtungspulver hat in der Verlaufsphase eine solche Viskosität, daß es zwischen die einzelnen Drahtwicklungen eindringt und diese wie ein flüssiger Kunstharz fest miteinander verbindet und somit eine Imprägnierung bewerkstelligt. Auf die mittels des Epoxydharzes miteinander verbundenen Drahtwicklungen wird eine zweite Schicht zum Schutz gegen Nässe und salzhaltiger Atmosphären aufgebracht. Diese Schicht umschließt das gesamte Wicklungspaket und bewirkt einen guten Abrasionsschutz sowie einen mechanischen Schutz gegen Staub und Abrieb. Darüber hinaus bewirkt die zweite Schicht einen zusätzlichen mechanischen Zusammenhalt der Wicklung sowie einen zusätzlichen Schutz gegen Feuchtigkeit.

In der DE 31 47 221 C2 ist eine Gleichstrommaschine, insbesondere ein Antriebsmotor für Elektro-Straßenfahrzeuge, beschrieben. Die Gleichstrommaschine weist Wendepol-Spulen aus im Querschnitt rechteckigem blanken Leiterdraht oder Leiterband auf. Das Leiterband ist hochkant zu Windungen der jeweiligen Spule gewickelt. Die Windungen werden so gewickelt, daß das Leiterband benachbarter Windungen beabstandet ist. Dieses voneinander beabstandete Leiterband aufeinander folgender Wicklungen wird im Wirbelsinterverfahren mit Pulver aus Polyethylen oder aus Polyurethan beschichtet, welches anschließend gehärtet wird.

Die DE 27 20 270 A1 offenbart eine elektrische Synchronmaschine mit direkt gasgekühltem Läufer. Eine in Nuten des Läufers angeordnete Erregerwicklung besteht aus metallischen Leitern, die von Kühlkanälen durchsetzt sind. Die Leiter sind gegeneinander isoliert. Zur Isolierung dient ein elektrophoretischer Auftrag von in Bindemitteln aufgeschwemmten anorganischen Stoffen, z. B. Glimmer. Ein solcher Auftrag hat gegenüber einer Lackierung den Vorteil einer gleichen Isolationsstärke auch auf den Kanten der Leiter.

Die EP 0 356 929 A1 zeigt einen elektrischen Leiter, der von einer Isolierung umgeben ist. Die Isolierung enthält zur Verbesserung einer Glimmschutzeigenschaft Chromoxid, Eisenoxid, Metallphtalocyanine oder eine Mischung dieser Substanzen. Als Trägermaterial kann ein Bisphenol-A haltiges Harz dienen.

Die DE 36 00 065 A1 beschreibt ein Verfahren zur Herstellung von kombinierten duroplastischen Korona-Tribo-Pulverlackschichten. Es wird nicht darauf eingegangen, eine solche Pulverlackbeschichtung für die Isolierung eines elektrischen Leiters zu verwenden.

Aufgabe der Erfindung ist es, einen elektrischen Leiter für eine Wicklung einer elektrischen Großmaschine anzugeben, welcher eine einfache und gegenüber den bekannten Isolationsschichten verbesserte Isolationsschicht aufweist. Eine weitere Aufgabe der Erfindung liegt in der Angabe eines Verfahrens zur Herstellung einer Isolierung bei einem elektrischen Leiter für eine elektrische Großmaschine.

Erfindungsgemäß wird die auf einen elektrischen Leiter für eine Wicklung einer elektrischen Großmaschine gerichtete Aufgabe gelöst durch einen elektrischen Leiter mit einer Längsrichtung und einer Stapelrichtung senkrecht zur Längsrichtung und zumindest einer Stapelfläche, wobei die Stapelfläche mit einer einen ausgehärteten Pulverlack aufweisenden Isolationsschicht beschichtet ist. Die Isolationsschicht kann vorzugsweise eine Hochspannungs-Isolationsschicht sein.

Durch eine Beschichtung zumindest der Stapelfläche mit einer solchen Isolationsschicht aus einem ausgehärteten Pulverlack ist eine fest mit dem elektrischen Leiter verbundene abriebsfeste Isolierung hergestellt. Diese Isolierung ist unmittelbar auch auf elektrische Leiter mit scharfen Kanten oder Unebenheiten auftragbar, wobei sich die Isolationsschicht abriebsfest über die scharfen Kanten und Unebenheiten legt, so daß unerwünschte elektrische Übergänge zwischen dem elektrischen Leiter und einem weiteren auf die Stapelfläche aufgelegten elektrischen Leiter sicher vermieden sind. Die Isolationsschicht ist einfach und in großtechnischem Maßstab mit einer vorgebbaren Schichtdicke herstellbar. Sie hat eine deutlich geringere Schichtdicke als bisher verwendete zwischen elektrische Leiter eingelegte Isolierschichten, wodurch ein höherer Füllgrad bei einer Wicklung einer elektrischen Großmaschine erreichbar ist. Die Isolationsschicht hat zudem eine hohe Temperaturbeständigkeit von bis zu 180 °C.

Zur Erhöhung der Isolationsfähigkeit der Isolationsschicht weist der Pulverlack vorzugsweise Glimmer auf. Der Glimmer ist beispielsweise feinkörnig dem Pulverlack vor Auftragung auf den elektrischen Leiter zugemischt. Die Korngröße des Glimmers ist der Schichtdicke der Isolationsschicht zur Erreichung einer möglichst hohen Isolationsfähigkeit angepaßt. Es ist ebenfalls möglich Glimmer in Form von Spaltglimmer in eine Isolationsschicht oder zwischen zwei sukzessiv aufgetragene sich miteinander verbindende Isolationsschichten einzubetten. Als Spaltglimmer sind dünne, durch Aufspaltung großer Glimmerkristalle erhaltene Blätter mit geringer Schichtdicke zu verstehen. Durch die Zugabe von Glimmer ist eine Hochspannungs-Isolationsschicht erzielbar.

Der Pulverlack weist vorzugsweise einen Epoxydharz, insbesondere auf Basis von Bisphenol-A, auf. Dem Epoxydharz ist ein geeigneter Härter zugesetzt, der eine gewünschte zu erzielende Aushärtung des Pulverlackes gewährleistet. Selbstverständlich können auch andere Pulverlacke, die zu einer den Anforderungen in einer elektrischen Großmaschine entsprechenden Isolationsfähigkeit und Temperaturbeständigkeit führen, verwendet werden. Dies können beispielsweise solche in der DE 35 28 492 A1 aufgeführte duroplastische Beschichtungspulver (Pulverlacke) auf Basis eines epoxydierenden Phenolnovolacks, eines epoxydierenden Kresolnovolacks, von Trisglycidylisocyanorat und entsprechenden Härtern, beispielsweise aus der Gruppe der Dicyandianmide, Amidinine, Carbonsäuren und phenolischen Hydroxylgruppen sein.

Der elektrische Leiter ist vorzugsweise vollständig mit der Isolationsschicht überzogen, d.h. sämtliche Oberflächen sind mit einer Isolationsschicht vorgegebener Schichtdicke beschichtet. Eine solche den elektrischen Leiter allseitig umgebende Isolierung gewährleistet, daß unerwünschte elektrische Übergänge zu anderen elektrisch leitfähigen Teilen sicher vermieden sind. Auch bietet eine solche Isolationsschicht aus einem duroplastischen Beschichtungspulver (Pulverlack) einen mechanischen Schutz des elektrischen Leiters, wobei insbesondere durch eine Beschichtung scharfer Kanten diese auf einfache Art und Weise gerundet werden und somit selbst keine Beschädigung anderer Teile hervorrufen. Durch die geringe Schichtdicke der Isolationsschicht ist zudem ein ausreichender Wärmeübergang zwischen dem elektrischen Leiter und den an ihn angrenzenden Teilen, beispielsweise einem weiteren elektrischen Leiter, gewährleistet.

Vorzugsweise ist der elektrische Leiter band- oder stabförmig, insbesondere aus einem massiven elektrisch leitfähigen Material, insbesondere einem Metall hergestellt. Hierdurch eignet sich der elektrische Leiter zur Führung hoher elektrischer Ströme und zur Abführung hoher thermischer Leistungen, z.B. in einem Turbogenerator.

Insbesondere bei einem elektrischen Leiter, welcher Öffnungen, wie beispielsweise in Längsrichtung gerichtete Schlitze, für eine in Stapelrichtung gerichtete Durchströmung eines Kühlfluides hat, führt eine Isolationsschicht aus ausgehärtetem Pulverlack dazu, daß Kanten im Bereich der Öffnungen gerundet und Unebenheiten in der Stapelfläche ausgeglichen werden. Mit einer Isolationsschicht aus ausgehärtetem Pulverlack ist es ebenfalls möglich, die innerhalb einer jeweiligen Öffnung liegende Oberfläche mit einer Isolierung zu beschichten. Durch die Isolationsschicht wird somit eine glatte Oberfläche erreicht, die einen geringen Strömungswiderstand für das durch die Öffnung strömende Kühlfluid, insbesondere Luft oder Wasserstoff, bewirkt. Bei einer Stapelung von mit Öffnungen versehenen elektrischen Leitern wird somit eine besonders gute, insbesondere radiale, Durchströmung mit Kühlgas und damit eine besonders effektive Kühlung der elektrischen Leiter erreicht. Durch einen unmittelbaren Kontakt der elektrischen Leiter an jeweils entsprechenden Stapelflächen ist zudem ein Wärmeübergang zwischen den Leitern gewährleistet, der ebenfalls zu einer Wärmeabfuhr beiträgt. Eine aus solchen Leitern hergestellte elektrische Wicklung läßt sich somit bei gleicher elektrischen Leistung kompakter ausführen. Hierbei kann insbesondere auch eine in Längsrichtung verlaufende die Öffnungen aufnehmende Nut entfallen. Bei gleicher Baugröße einer elektrischen Großmaschine, insbesondere eines Turbogenerators mit radialer Kühlung der Leistungsklasse von 20 MVA bis über 400 MVA sowie eines Turbogenerators mit direkter Kühlung der Leistungsklasse von über 400 MVA, ist hierdurch eine Leistungssteigerung erzielbar.

Je nach geforderter Isolationsfähigkeit und verwendetem duroplastischen Beschichtungspulver (Pulverlack) beträgt die Schichtdicke der Isolationsschicht vorzugsweise zwischen 40 µm und 200 µm. Es ist ebenfalls möglich, größere Schichtdicken herzustellen.

Gemäß der Erfindung bildet eine Mehrzahl elektrischer Leiter eine Anordnung, insbesondere eine Wicklung in einem Läufer eines Turbogenerators, wobei zumindest zwei Leiter in Stapelrichtung übereinander gestapelt und die jeweiligen einander zugeordneten Stapel flächen in unmittelbarem mechanischen Kontakt sind, wobei zumindest eine Stapelfläche mit der Isolationsschicht beschichtet ist. Durch eine Beschichtung eines elektrischen Leiters an zumindest einer Stapelfläche wird selbst dann eine ausreichende Isolation hergestellt, wenn ein weitgehend identischer Leiter mit einer nicht mit einer Isolationsschicht versehenen Stapelfläche auf die mit der Isolationsschicht versehenen Stapelfläche aufgelegt wird. Eine Anordnung aus weitgehend identischen elektrischen Leitern zur Herstellung einer Wicklung einer elektrischen Großmaschine ist besonders einfach herstellbar, da die elektrischen Leiter lediglich paßgenau aufeinander gestapelt werden müssen. Das Einführen zusätzlicher Isolationsschichten, die gegebenenfalls noch entsprechend vorhandener Öffnungen für ein Kühlfluid ausgerichtet werden müssen, kann vollständig entfallen. Sind die aneinandergrenzenden Stapel flächen benachbarter elektrischer Leiter jeweils mit einer Isolationsschicht aus einem ausgehärteten Pulverlack versehen, so wird neben einer erhöhten Isolationsfähigkeit auch noch erreicht, daß ein Abrieb von Metall, beispielsweise in Form von Metallstaub, vermieden wird. Somit wird auch im Betrieb einer elektrischen Großmaschine bei einem Aneinanderreiben benachbarter elektrischer Leitern vermieden, daß sich unkontrolliert in einer Wicklung elektrisch leitfähiges Material, metallischer Abrieb, ausbreitet, welcher einen unerwünschten elektrischen Übergang zwischen elektrischen Leitern oder anderen elektrisch leitfähigen Teilen bewirken könnte.

Die Anordnung aus übereinander gestapelten elektrischen Leitern ist vorzugsweise in einer, insbesondere in Längsrichtung verlaufenden, Nut eines Stators oder eines Läufers einer elektrischen Großmaschine, insbesondere eines Turbogenerators angeordnet. Mit einer solchen Anordnung wird eine thermomechanisch besonders stabile und kompakte Isolierung erreicht. Hierdurch kann die Leistungsdichte einer Wicklung einer elektrischen Großmaschine und damit die elektrische Leistung derselben erhöht werden.

Zur Verbesserung der Isolation ist es ebenfalls möglich, die Nut des Stators oder des Läufers mit einer Isolationsschicht aus einem ausgehärteten Pulverlack, welcher insbesondere Glimmer enthält, zumindest teilweise auszukleiden. Neben der Isolationswirkung trägt eine solche Auskleidung ebenfalls zu einem mechanischen Schutz und der Verhinderung eines metallischen Abriebes bei, wodurch die Gefahr unerwünschter elektrischer Übergänge weiter reduziert wird.

Die auf ein Verfahren zur Isolation, insbesondere Hochspannungs-Isolation, eines elektrischen Leiters einer elektrischen Großmaschine gerichtete Aufgabe wird erfindungsgemäß durch ein Verfahren gelöst, bei dem der Leiter bei einer Temperatur von 20 °C bis 70 °C mit einem Pulverlack beschichtet und der Pulverlack bei einer Temperatur von 120 °C bis 200 °C, insbesondere 140 °C ausgehärtet wird.

Die für die Aushärtung des Pulverlacks erforderliche Dauer, während der der elektrische Leiter auf der vorgegebenen Temperatur gehalten wird, beträgt beispielsweise zwischen 10 min und 20 min. Während der Auftragungsphase ist, wenn überhaupt, nur eine geringfügige Erwärmung des elektrischen Leiters erforderlich. Die Auftragung des Pulverlackes kann somit auch außerhalb eines Ofens erfolgen.

Zum Auftragen des Pulverlacks auf den elektrischen Leiter eignet sich das elektrostatische Pulversprühen (EPS), das elektrostatische Wirbelbadverfahren sowie eine elektrostatische Wirbelbettbeschichtung, wie sie beispielsweise in dem Buch "Fertigungsverfahren in der Gerätetechnik" von F. Grünwald, 2. Auflage, Carl Hanser Verlag München, 1985, Abschnitt 9.5.2.4, beschrieben sind. Beim elektrostatischen Pulversprühen (EPS-Verfahren) wird das Pulver über sogenannte Korona-Sprühpistolen oder Tribo-Pistolen aufgebracht. In beiden Fällen kann überschüssige nicht an dem elektrischen Leiter haften gebliebener Pulverlack wieder zurückgewonnen und damit einer erneuten Verwendung zugeführt werden. Als Pulverlacke eignen sich besonders Epoxyd-Harzpulver mit Aushärtungszeiten von 15 min bis 5 min bei Temperaturen von 140 °C bzw. 210 °C. Mit diesen Epoxyd-Harzpulvern sind sehr gute mechanische und chemische Schichteigenschaften erzielbar. Als weitere Pulverlacke bieten sich Polyurethan-Pulverlacke, Polyester-Pulverlacke sowie Acryl-Harzpulverlacke an. Nach Aushärtung und Abkühlung ist eine Einschichtlackierung mit einer gleichmäßigen Isolationsschichtdicke im Bereich zwischen 400 µm und 200 µm sowie einer hohen Härte und Widerstandsfähigkeit gegeben. Mit dem Pulversinterverfahren (Wirbelsintern) sind größere Schichtdicken von ca. 200 µm bis 1000 µm mit spezifischen Eigenschaften, wie hoher Korrosions- und Chemikalienbeständigkeit, erreichbar. Die Pulverlacke lassen sich zudem gefahrlos lagern und aufgrund der hohen Ausnutzung (bis zu 99 %) entsteht lediglich ein geringer Entsorgungsaufwand. Ein Pulverlack hat vorzugsweise eine Pulverkorngröße von 30 µm bis 100 µm, wobei der überwiegende Anteil von Pulverkörnern eine Pulverkorngröße kleiner als 70 µm aufweist.

Anhand der in der Zeichnung dargestellten Ausführungsbeispiele werden der elektrische Leiter, eine Anordnung aus elektrischen Leitern in einem Läufer einer elektrischen Großmaschine sowie das Verfahren zur Herstellung einer Isolation näher erläutert. Es zeigen:
- FIG 1: einen Ausschnitt eines elektrischen Leiters in einer perspektivischen Darstellung,
- FIG 2: einen Ausschnitt eines Läufers eines Turbogenerators mit einer Anordnung gestapelter elektrischer Leiter in perspektivischer Darstellung sowie
- FIG 3: einen Querschnitt durch eine Anordnung gestapelter elektrischer Leiter.

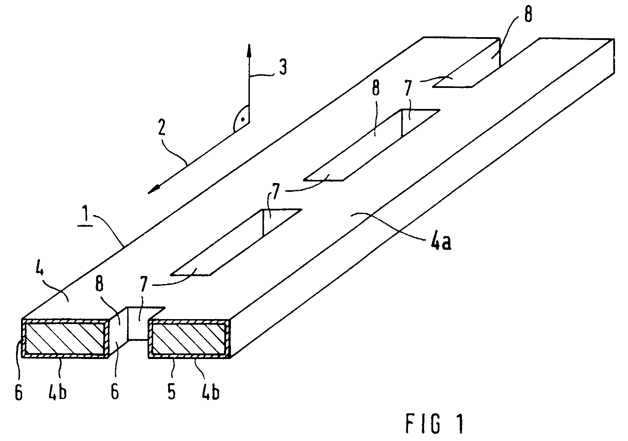

FIG 1 zeigt in einer Schrägansicht einen Ausschnitt eines elektrischen Leiters 1, welcher entlang einer Längsrichtung 2 gerichtet ist und eine Vielzahl von Öffnungen 7 in Form von entlang der Längsrichtung 2 gerichteten Schlitzen aufweist. Diese Öffnungen 7 dienen einer radialen Kühlung des Leiters 1, bei der Kühlfluid in radialer Richtung durch den Leiter 1 geführt wird. Jede Öffnung 7 führt parallel zu einer senkrecht zur Längsrichtung 2 stehenden Stapelrichtung 3 durch den Leiter 1 hindurch. Der elektrische Leiter 1 hat zwei Stapelflächen 4, die jeweils in einer senkrecht zur Stapelrichtung 3 liegenden Ebene liegen. Gemäß der Darstellung nach FIG 1 wird die oben liegende Stapelfläche mit 4a und die unten liegende Stapelfläche mit 4b gekennzeichnet. Der elektrische Leiter 1 ist als bandförmiger Vollkörper aus einem Metall gefertigt. Er ist an seinen sämtlichen Oberflächen, also auch den Oberflächen 8 in den Öffnungen 7, mit einer Isolationsschicht 6 aus einem duroplastischen Beschichtungspulver (Pulverlack) 5 beschichtet. Hierdurch sind sämtliche scharfen Kanten oder Unebenheiten des metallischen Vollkörpers durch die Isolationsschicht 6 bedeckt, welche neben einer Vollisolierung auch noch einen allseitigen Schutz gegen mechanischen Abrieb darstellt. Die Isolationsschicht 6 ist gegenüber dem metallischen Vollkörper zur Verdeutlichung vergrößert dargestellt. Da der metallische Vollkörper außer den Öffnungen 7 keinerlei weitere Vertiefungen, wie beispielsweise in Längsrichtung 2 verlaufende Nuten, aufweist, hat er einen besonders großen Querschnitt zur Leitung eines elektrischen Stroms, was unter dem Aspekt der durch den elektrischen Strom verursachten Wärmebelastung vorteilhaft ist. Die Öffnungen 7 bilden bei einer Anordnung aus unmittelbar aufeinander gestapelten elektrischen Leitern 1, 1a, 1b jeweils einen Kühlkanal 11 zur Führung eines Kühlfluides, insbesondere von Luft oder Wasserstoff. Da auf jeden elektrischen Leiter 1 bereits eine vollständige Isolationsschicht 6 aufgebracht ist, können weitgehend identische Leiter 1 unmittelbar ohne Zwischeneinlage von zusätzlichen Isolationsstreifen aufeinander gestapelt werden. Hierbei liegen entsprechende Öffnungen 7 unmittelbar übereinander, so daß für eine Durchströmung von Kühlfluid der gesamte Querschnitt der Öffnungen 7 zur Verfügung steht. Da zudem die Isolationsschicht 6 eine glatte Oberfläche 8 bildet, ist der Strömungswiderstand gering. Neben einer besonders guten und thermomechanisch stabilen Isolierung wird somit auch eine besonders effektive Kühlung der elektrischen Leiter 1 durch Kühlfluid gewährleistet.

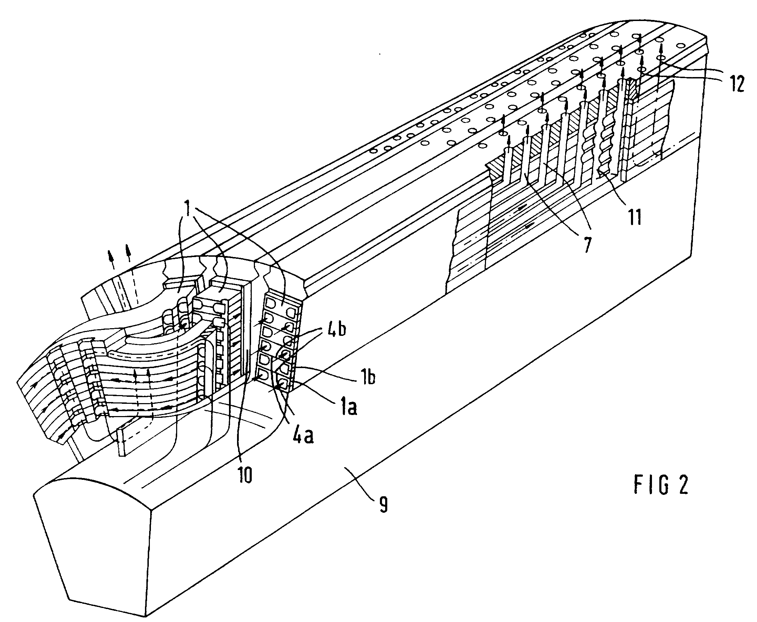

FIG 2 zeigt in einer Schrägansicht einen Ausschnitt durch einen Läufer 9 eines Turbogenerators, insbesondere der Leistungsklasse über 400 MVA. Der Läufer 9 hat an seinem Außenumfang eine Vielzahl von Nuten 10, die für eine Aufnahme einer Anordnung aus gestapelten elektrischen Leitern 1 sowohl in radialer Richtung als auch in Längsrichtung 2 gerichtet sind. Der Übersichtlichkeit halber sind lediglich drei Nuten 10 mit einer jeweiligen Anordnung aus gestapelten elektrischen Leitern 1a, 1b dargestellt. Die Leiter 1a, 1b weisen in ihrem Inneren axiale Kühlkanäle auf, durch die das Kühlfluid eine direkte axiale Kühlung bewirkend hindurchströmt. Analog lassen sich Leiter gemäß FIG 1 für eine radiale Kühlung in einem Läufer 9 stapeln. Die elektrischen Leiter 1a, 1b sind so aufeinander gestapelt, daß jeweils die untere Stapelfläche 4b, z.B. des Leiters 1b, in mechanischem Kontakt mit der oberen Stapelfläche 4a, beispielsweise des elektrischen Leiters la, steht. Durch die Öffnungen 7 in einem Bereich radialer Kühlung und/oder Abströmung der aufeinander gestapelten Leiter 1 werden in Stapelrichtung 3 gerichtete Kühlkanäle 11 gebildet. Durch die Kühlkanäle 11 kann, wie schematisch durch die Pfeile 12 dargestellt, Kühlfluid, insbesondere Luft oder Wasserstoff strömen. Analog ist es ebenfalls möglich, eine entsprechende Anordnung aus elektrischen Leitern 1 in entsprechende Nuten eines nicht dargestellten den Läufer 9 umgebenden Ständers des Turbogenerators anzuordnen. Es wird neben einer vereinfachten Isolierung auch ein besonders effektiver Kühlfluidstrom erreicht, wodurch eine besonders kompakte Anordnung der elektrischen Leiter erreicht. Durch die besonders gute Kühlung der elektrischen Leiter 1 durch das durch sie hindurchströmende Kühlfluid und den direkten mechanischen Kontakt der Leiter 1 untereinander ist ein besonders hoher elektrischer Strom durch einen jeweiligen Leiter 1 hindurchführbar. Gegenüber bekannten Turbogeneratoren kann somit bei gleicher elektrischer Leistung die Größe des Turbogenerators reduziert oder bei gleicher Größe des Turbogenerators die elektrische Leistung erhöht werden.

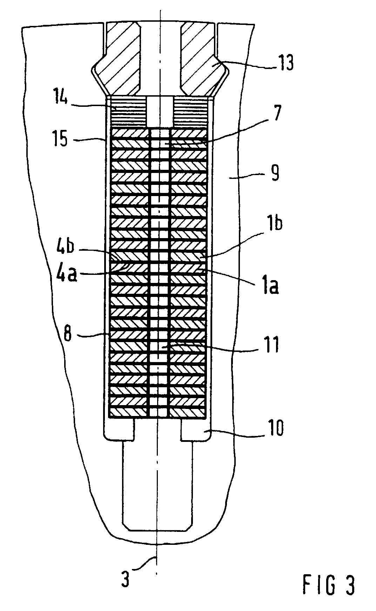

FIG 3 zeigt in einem Querschnitt eine Anordnung aufeinander gestapelter elektrischer Leiter la, 1b (siehe FIG 1) in einer Nut 10 eines Läufers 9 einer elektrischen Großmaschine. Die elektrischen Leiter la, 1b sind so angeordnet, daß entsprechende Öffnungen 7 jeweils einen Kühlkanal 11 zur Durchströmung eines Kühlfluides bilden. Die Anordnung ist mittels einer Arretierung 13 fest in der Nut gehalten. Zwischen Arretierung 13 und der Anordnung sowie zwischen der Wandung 15 der Nut 10 kann eine Zusatzisolierung bzw. ein Abstandshalter 14 angeordnet sein.

Die Erfindung zeichnet sich durch eine Isolierung für einen elektrischen Leiter einer elektrischen Großmaschine, insbesondere eines gasgekühlten Turbogenerators im Leistungsbereich von 20 MVA bis zu über 400 MVA, aus, die als eine sämtliche Oberflächen des elektrischen Leiters bedeckende Isolationsschicht aus einem duroplastischen Beschichtungspulver (Pulverlack) gebildet ist. Die Isolationsschicht aus dem ausgehärteten Pulverlack überzieht den elektrischen Leiter so, daß selbst scharfe Kanten und Unebenheiten bedeckt bzw. ausgeglichen sind. Der elektrische Leiter besitzt somit eine langzeit- und thermomechanisch beständige hochspannungsfeste Vollisolierung. Diese läßt sich mit bekannten Verfahren einfach und schnell herstellen. Es können somit besonders einfach weitgehend identische elektrische Leiter zur Herstellung einer Wicklung einer elektrischen Großmaschine aufeinander gestapelt werden. Die Isolationsschicht bedeckt ebenfalls die Oberfläche von Öffnungen zur radialen Führung von Kühlgas durch den elektrischen Leiter hindurch, so daß auch die im Bereich der Öffnungen möglicherweise auftretenden scharfen Kanten bedeckt und somit isoliert sind. Eine unerwünschte elektrische Überbrückung zwischen den aufeinandergestapelten elektrischen Leitern ist somit bereits ohne Zwischenlage zusätzlicher Isolierstreifen gegeben. Die Isolationsschicht stellt darüber hinaus einen Schutz gegen Abrieb infolge eines Aneinanderreibens der elektrischen Leiter dar, so daß auch verhindert wird, daß ein Metallabrieb an den Leiter stattfindet, welcher ansonsten eine Quelle möglicher unerwünschter elektrischer Überbrückungen wäre. Da zudem die Schichtdicke der Isolationsschicht gering ist, findet auch ein ausreichender Wärmeübertrag zwischen benachbarten elektrischen Leitern statt. Da außer den Öffnungen keine zusätzlichen Materialreduzierungen des elektrischen Leiters, beispielsweise in Längsrichtung verlaufenden Nuten, erforderlich sind, kann mit jedem elektrischen Leiter ein besonders großer Querschnitt zur Führung eines elektrischen Stroms bereitgestellt werden. Der erfindungsgemäße elektrische Leiter weist somit eine besonders gute Isolierung, eine effektive Kühlung durch Kühlfluid sowie einen großen Querschnitt für die Führung eines elektrischen Stroms auf, so daß bei besonders kompakter Ausführung eines Turbogenerators eine hohe elektrische Leistungsaufnahme und -abgabe erreichbar ist.

## Patentansprüche

1. Elektrischer Leiter (1) für eine Wicklung (7) einer elektrischen Großmaschine mit einer Längsrichtung (2) und einer Stapelrichtung (3) senkrecht zur Längsrichtung (2) und zumindest einer Stapelfläche (4), die mit einer einen ausgehärteten Pulverlack (5) aufweisenden Isolationsschicht (6) beschichtet ist.

2. Elektrischer Leiter (1) nach Anspruch 1, bei dem der ausgehärtete Pulverlack (5) Glimmer enthält.

3. Elektrischer Leiter (1) nach Anspruch 1 oder 2, bei dem der ausgehärtete Pulverlack (5) ein Epoxydharz, insbesondere auf Basis von Bisphenol-A, aufweist.

4. Elektrischer Leiter (1) nach einem der vorhergehenden Ansprüche, der vollständig mit der Isolationsschicht (6) überzogen ist.

5. Elektrischer Leiter (1) nach einem der vorhergehenden Ansprüche, der band- oder stabförmig ist.

6. Elektrischer Leiter (1) nach einem der vorhergehenden Ansprüche, der Öffnungen (7), insbesondere in Längsrichtung (2) gerichtete Schlitze, für eine in Stapelrichtung (3) gerichtete Durchströmung eines Kühlfluids aufweist.

7. Elektrischer Leiter (1) nach Anspruch 6, bei dem die in einer jeweiligen Öffnung (7) liegende Oberfläche (8) mit der Isolationschicht (6) beschichtet ist.

8. Elektrischer Leiter (1) nach einem der vorhergehenden Ansprüche, bei dem die Isolationsschicht (6) eine Schichtdicke von 40 µm bis 200 µm aufweist.

9. Anordnung elektrischer Leiter (1) nach einem der vorhergehenden Ansprüche, bei der zumindest zwei Leiter (1a, 1b) in Stapelrichtung (3) übereinander gestapelt und die jeweiligen einander zugeordneten Stapel flächen (4a, 4b) in unmittelbarem mechanischen Kontakt sind, wobei zumindest eine Stapelfläche (4a, 4b) mit der Isolationsschicht (6) beschichtet ist.

10. Anordnung nach Anspruch 9, die in einer Nut (10) eines Stators oder eines Läufers (9) einer elektrischen Großmaschine, insbesondere eines Turbogenerators, angeordnet ist.

11. Anordnung nach Anspruch 10, wobei die Nut (10) mit einer Isolationsschicht (6) aus einem ausgehärteten Pulverlack (5), welcher insbesondere Glimmer enthält, zumindest teilweise ausgekleidet ist.

12. Verfahren zur Isolation eines elektrischen Leiters (1) einer elektrischen Großmaschine, bei dem der Leiter (1) bei einer Temperatur von 20 °C bis 70 °C mit einem Pulverlack (5) beschichtet und der Pulverlack (5) bei einer Temperatur von 120 °C bis 200 °C, insbesondere 140 °C, ausgehärtet wird.

13. Verfahren nach Anspruch 12, bei dem der Pulverlack (5) mittels elektrostatischen Pulversprühens (EPS) oder nach dem elektrostatischen Wirbelbadverfahren aufgebracht wird.

## Claims

1. Electric conductor (1) for a winding (7) of a large electric machine, having a longitudinal direction (2) and a stacking direction (3) perpendicular to the longitudinal direction (2) and at least one stacking face (4) which is coated with an insulation layer (6) having a cured powder coating (5).

2. Electric conductor (1) according to Claim 1, in which the cured powder coating (5) contains mica.

3. Electric conductor (1) according to Claim 1 or 2, in which the cured powder coating (5) has an epoxy resin, in particular one based on bisphenol A.

4. Electric conductor (1) according to one of the preceding claims, which is completely covered by the insulation layer (6).

5. Electric conductor (1) according to one of the preceding claims, which is tape-shaped or rod-shaped.

6. Electric conductor (1) according to one of the preceding claims, which has openings (7), in particular slots directed in the longitudinal direction (2), for the through flow, directed in the stacking direction (3), of a cooling fluid.

7. Electric conductor (1) according to Claim 6, in which the surface (8) l5ocated in each opening (7) is coated with the insulation layer (6).

8. Electric conductor (1) according to one of the preceding claims, in which the insulation layer (6) has a layer thickness from 40 mm to 200 mm.

9. Arrangement of electric conductors (1) according to one of the preceding claims, in which at least two conductors (1a, 1b) are stacked one above another in the stacking direction (3), and the respective mutually assigned stacking faces (4a, 4b) are in direct mechanical contact, at least one stacking face (4a, 4b) being coated with the insulation layer (6).

10. Arrangement according to Claim 9, which is arranged in a groove (10) in a stator or in a rotor (9) of a large electric machine, in particular of a turbogenerator.

11. Arrangement according to Claim 10, the groove (10) being at least partly lined with an insulation layer (6) made of a cured powder coating (5) which, in particular, contains mica.

12. Method for the insulation of an electric conductor (1) of a large electric machine, in which the conductor (1) is coated with a powder coating (5) at a temperature from 20°C to 70°C, and the powder coating (5) is cured at a temperature from 120°C to 200°C, in particular 140°C.

13. Method according to Claim 12, in which the powder coating (5) is applied by means of electrostatic powder spraying (EPS) or according to the electrostatic fluidized bed process.

## Revendications

1. Conducteur électrique (1) pour un enroulement (7) d'une grande machine électrique, comportant une direction longitudinale (2) et une direction d'empilage (3) perpendiculaire à la direction longitudinale (2), et au moins une surface d'empilage (4), qui est revêtue d'une couche isolante (6) constituée d'un vernis en poudre durci (5).

2. Conducteur électrique (1) selon la revendication 1, dans lequel le vernis en poudre durci (5) contient du mica.

3. Conducteur électrique (1) selon la revendication 1 ou 2, dans lequel le vernis en poudre durci (5) est une résine époxyde, en particulier à base de bisphénol A.

4. Conducteur électrique (1) selon l'une des revendications précédentes, qui est entièrement recouvert de la couche isolante (6).

5. Conducteur électrique (1) selon l'une des revendications précédentes, qui se présente sous forme d'une bande ou d'une barre.

6. Conducteur électrique (1) selon l'une des revendications précédentes, qui comporte des ouvertures (7), en particulier des fentes dirigées dans la direction longitudinale (2), pour permettre le passage, dirigé dans la direction d'empilage (3), d'un fluide de refroidissement.

7. Conducteur électrique (1) selon la revendication 6, dans lequel la surface (8) se trouvant dans chaque ouverture (7) est revêtue de la couche isolante (6).

8. Conducteur électrique (1) selon l'une des revendications précédentes, dans lequel la couche isolante (6) a une épaisseur de couche de 40 à 200 µm.

9. Ensemble de conducteurs électriques (1) selon l'une des revendications précédentes, dans lequel au moins deux conducteurs (1a, 1b) sont empilés l'un au-dessus de l'autre dans la direction d'empilage (3), et les surfaces d'empilage (4a, 4b), affectées l'une à l'autre, sont en contact mécanique direct, au moins une surface d'empilage (4a, 4b) étant revêtue de la couche isolante (6).

10. Ensemble selon la revendication 9, qui est disposé dans une encoche (10) d'un stator ou d'un rotor (9) d'une grande machine électrique, en particulier d'un turbo-alternateur.

11. Ensemble selon la revendication 10, dans lequel l'encoche (10) est au moins partiellement revêtue d'une couche isolante (6) constituée d'un vernis en poudre durci (5), qui en particulier contient du mica.

12. Procédé pour isoler un conducteur électrique (1) d'une grande machine électrique, dans lequel le conducteur (1) est revêtu d'un vernis en poudre (5) à une température de 20 à 70°C, et le vernis en poudre (5) est durci à une température de 120 à 200°C, en particulier de 140°C.

13. Procédé selon la revendication 12, dans lequel le vernis en poudre (5) est appliqué par le procédé de pulvérisation électrostatique en poudre (EPS) ou par le procédé électrostatique en lit fluidisé.
